(19) Europäisches Patentamt
European Patent Office
Office européen des brevets

(11) Veröffentlichungsnummer: **0 276 768 B1**

(12) **EUROPÄISCHE PATENTSCHRIFT**

(45) Veröffentlichungstag der Patentschrift: **28.04.93**

(51) Int. Cl.[5]: **C08L 71/12**, C08L 77/00

(21) Anmeldenummer: **88100889.0**

(22) Anmeldetag: **22.01.88**

(54) **Kontinuierliches Verfahren zur Herstellung von Formmassen auf der Basis von Polyphenylenethern und Polyamiden.**

(30) Priorität: **29.01.87 DE 3702582**

(43) Veröffentlichungstag der Anmeldung:
**03.08.88 Patentblatt 88/31**

(45) Bekanntmachung des Hinweises auf die Patenterteilung:
**28.04.93 Patentblatt 93/17**

(84) Benannte Vertragsstaaten:
**BE DE FR GB NL**

(56) Entgegenhaltungen:
**EP-A- 0 024 120**
**EP-A- 0 046 040**
**EP-A- 0 205 816**
**EP-A- 0 226 910**
**WO-A-86/02086**

(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 15**
**W-6706 Wachenheim(DE)**
Erfinder: **Gausepohl, Hermann, Dr.**
**Neuweg 10**
**W-6704 Mutterstadt(DE)**
Erfinder: **Seiler, Erhard, Dr.**
**Erpolzheimer Strasse 1**
**W-6700 Ludwigshafen(DE)**
Erfinder: **Boehlke, Klaus, Dr.**
**Gerhart-Hauptmann-Strasse 53**
**W-6717 Hessheim(DE)**
Erfinder: **Schlemmer, Lothar**
**Duisbergstrasse 1 a**
**W-6701 Maxdorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Die Erfindung betrifft ein kontinuierliches Verfahren zur Herstellung von thermoplastischen Formmassen auf der Basis von Polyphenylethern (PPE) und Polyamiden in einem Extruder.

Thermoplastische Formmassen auf der Basis von Polyphenylenethern und Polyamiden sind z.B. aus der US-A 3 379 792, der GB-A 20 54 623, der EP-A 24 120 und der EP-A 46 040 bekannt. Zur Herstellung werden PPE und Polyamid gleichzeitig in einen Extruder dosiert und in der Schmelze gemischt. Bedingt durch die Unverträglichkeit von PPE und Polyamiden sind jedoch die mechanischen Eigenschaften von aus den Formkörpern hergestellten Formmassen nicht zufriedenstellend.

In der US-A 4 338 421 werden PPE und Polyamide bei einer Temperatur von 200 bis 330 °C über einen Zeitraum von 1 bis 10 min. miteinander gemischt. Auch die nach diesem Verfahren hergestellten Formmassen ergeben keine Formkörper mit befriedigenden Eigenschaften.

Aufgabe der vorliegenden Erfindung war es daher, ein Verfahren zur Herstellung von Formmassen auf der Basis von PPE und Polyamiden zur Verfügung zu stellen, welches Formmassen mit verbesserten Eigenschaften liefert.

Diese Aufgabe wird erfindungsgemäß durch ein Verfahren gemäß Anspruch 1 gelöst.

Das Verfahren kann vorzugsweise auf Ein- oder Zweischneckenextrudern durchgeführt werden. Diese sind vorzugsweise aus einzelnen Gehäusen zusammengesetzt, die temperierbare Mäntel aufweisen. Die Gestaltung der Schnecken unterliegt keiner Beschränkung, es können Förderelemente (mit oder ohne Schubkanten), Knetelemente und/oder Mischelemente vorhanden sein. Darüber hinaus ist es möglich und häufig vorteilhaft teilweise, d.h. abschnittsweise stauende oder rückfördernde Elemente im Extruder zu verwenden, um Verweilzeit und Mischungseigenschaften zu beeinflussen und zu steuern.

Wegen der selbstreinigenden Eigenschaften und der besseren Einstellbarkeit des Verweilzeitspektrums werden besonders bevorzugt Zweischneckenextruder mit gleichlaufenden Schnecken eingesetzt. Der Extruder ist in mindestens 2, vorzugsweise 3 und gegebenenfalls auch in mehr Zonen unterteilt.

Nach dem erfindungsgemäßen Verfahren wird zunächst in einer ersten Zone des Extruders durch Umsetzung von

$a_1$) 50 bis 99,95 Gew.% eines Polyphenylenethers

$a_2$) 1 bis 35 Gew.% eines vinylaromatischen Polymeren

$a_3$) 0,05 bis 10 Gew.%

$a_{31}$) einer α,ß-ungesättigten Carbonsäure oder deren Derivaten der allgemeinen Formel I

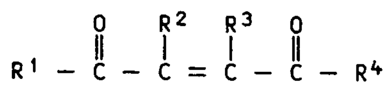

(I)

wobei

$R^1$ und $R^4$ Hydroxylgruppen, Aryloxy-, Alkoxy-, Aralkoxy- oder Cycloalkoxygruppen mit bis zu 12 C-Atomen oder gemeinsam -O-oder -$NR^5$-,

$R^2$ und $R^3$ Wasserstoff, eine Alkyl- oder Cycloalkylgruppe mit bis zu 12 C-Atomen, eine Arylgruppe, Chlor, oder gemeinsam eine Alkylengruppe mit 4 bis 12 C-Atomen,

$R^5$ Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können,

darstellen, und/oder

$a_{32}$) eines Amid-Gruppen enthaltenden Monomeren mit einer polymerisierbaren Doppelbindung, und/oder

$a_{33}$) eines Lactam-Gruppen enthaltenden Monomeren mit einer polymerisierbaren Doppelbindung

sowie darüber hinaus

$a_4$) 0 bis 45 Gew.% weiterer pfropfaktiver Monomerer und

$a_5$) 0 bis 20 Gew.% eines Radikalstarters

wobei die Angaben in Gew.% sich jeweils auf das Gesamtgewicht der Komponenten $a_1$ bis $a_5$ beziehen, bei Temperaturen von 240 bis 350 °C, vorzugsweise 260 bis 300 °C und Reaktionszeiten (mittlere Verweilzeiten im Extruder) von 0,1 bis 15 min, vorzugsweise 0,1 bis 10 min und insbesondere 0,5 bis 3 min, ein modifizierter Polyphenylenether A hergestellt.

Die erste Zone des Extruders, in der der modifizierte Polyphenylenether hergestellt wird, weist vorzugsweise eine Länge von 3,5 bis 30, bevorzugt 10 bis 25 D (D = Durchmesser der Schnecke) auf.

In der Nähe der Dosieröffnung in der ersten Zone sind an der Schnecke bevorzugt Förderelemente angebracht, im weiteren Verlauf können sich auch Knetelemente befinden. Am Ende der ersten Zone ist besonders bevorzugt mindestens ein rückförderndes Element vorhanden, mit dem die Verweilzeit in der ersten Zone beeinflußt werden kann.

Unter modifiziertem PPE soll hierin ein durch die Umsetzung der Komponenten $a_1$) bis $a_5$) erhaltenes Produkt verstanden werden.

Bei der Komponente $a_1$) handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Der Anteil der Komponente $a_1$), bezogen auf die Summe der Komponenten $a_1$) bis $a_5$) betragt 4,95 bis 99,95, vorzugsweise 10 bis 99,95 und insbesondere 50 bis 90 Gew.%.

Die eingesetzten Polyphenylenether weisen im allgemeinen ein Molekulargewicht (Gewichtsmittelwert) im Bereich von 10.000 bis 80.000, vorzugsweise von 20.000 bis 60.000 auf.

Nur beispielsweise seien hier einige Polyphenylenether aufgeführt, wie sie u.a. in O. Olabisi, 1.c., S. 224 bis 230 und 245 genannt werden, wie Poly(2,6-diethyl-1-phenylen)-oxid, Poly(2-methyl-6-ethyl-1,4-phenylen)oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die Einheiten von 2,3,6-Trimethylphenol enthalten, außerdem Polymermischungen. Besonders bevorzugt ist jedoch Poly(2,6-dimethyl-1,4-phenylen)oxid.

Die Komponente $a_2$), die bei der Herstellung des modifizierten Polyphenylenethers zugegeben wird, ist ein vinylaromatisches Polymer, das vorzugsweise mit dem eingesetzten Polyphenylenether verträglich ist.

Das Molekulargewicht dieser Polymeren liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol, p-Methylstyrol genannt; in untergeordneten Anteilen (vorzugsweise nicht mehr als 20, insbesondere nicht mehr als 8 Gew.%) , können auch Comonomere wie (Meth)acrylnitril oder (Meth)acrylsäureestern am Aufbau beteiligt sein. Besonders bevorzugte vinylaromatische Polymere sind Polystyrol und schlagzäh modifiziertes polystyrol. Es versteht sich, daß auch Mischungen dieser Polymeren eingesetzt werden können.

Verfahren zur Herstellung solcher vinylaromatischer Polymeren sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions- oder Lösungspolymerisation erwähnt.

Der Anteil des vinylaromatischen Polymeren $a_2$) an der Komponente A) liegt im Bereich von 1 bis 35 und insbesondere 2 bis 10 Gew.%.

Als wesentliche Komponente $a_3$) wird bei der Herstellung des modifizierten Polyphenylenethers A) mindestens eine der Verbindungen $a_{31}$) bis $a_{33}$) eingesetzt.

Prinzipiell können auch Mischungen verschiedener Verbindungen $a_{31}$) bis $a_{33}$) eingesetzt werden, doch ist im allgemeinen die Verwendung nur einer dieser Verbindungsarten vorteilhaft.

Bei der Komponente $a_{31}$ handelt es sich um $\alpha,\beta$-ungesättigte Dicarbonylverbindungen der allgemeinen Formel IV

$$R1-\overset{\overset{\displaystyle O}{\|}}{C}-\overset{\overset{\displaystyle R^2}{|}}{C}=\overset{\overset{\displaystyle R^3}{|}}{C}-\overset{\overset{\displaystyle O}{\|}}{C}-R^4 \qquad IV,$$

wobei

| | |
|---|---|
| $R^1$ und $R^4$ | Hydroxylgruppen, Aryloxy-, Alkoxy-, Aralkoxy- oder Cycloalkoxygruppen mit bis zu 12 C-Atomen, oder gemeinsam -O- oder $-NR^5-$, |
| $R^2$ und $R^3$ | Wasserstoff eine Alkyl- oder Cycloalkylgruppe mit bis zu 12 C-Atomen, eine Arylgruppe, Chlor, oder gemeinsam eine Alkylengruppe mit 4 bis 12 C-Atomen, |
| $R^5$ | Wasserstoff, Alkyl-, Cycloalkyl-, Aralkyl- oder Arylgruppen mit bis zur 12 C-Atomen, die ihrerseits durch $C_1$-$C_4$-Alkyl- oder -Alkoxygruppen substituiert sein können, darstellen. |

Die Substituenten müssen, was sich allerdings von selbst versteht, so beschaffen sein, daß sie die Modifizierungsreaktion nicht verhindern. Es handelt sich daher im allgemeinen bei den Verbindungen $a_{31}$ um α,β-ungesättigte Dicarbonsäuren, deren Anhydride, Imide, Monoester, oder Diester dieser Dicarbonsäuren.

Als Beispiele für Dicarbonsäuren seien Maleinsäure, Fumarsäure, Methylmaleinsäure, Butenylbernsteinsäure, Tetrahydrophthalsäure und Chlormaleinsäure genannt, von denen Fumarsäure besonders bevorzugt wird.

Als Anhydride seien beispielhaft erwähnt Maleinsäureanhydrid, Methylmaleinsäureanhydrid und Chlormaleinsäureanhydrid.

Bervorzugte Imide leiten sich von der Maleinsäure ab. Die Substituenten $R^2$, $R^3$ und $R^5$ sind dabei Alkylgruppen mit 1 bis 4 C-Atomen, beispielsweise Methyl-, Ethyl- oder n-, i- oder t-Butyl, Cycloakylgruppen mit bis zu 8 C-Atomen oder Phenylgruppen, wobei $R^{13}$ durch $C_1$-$C_4$-Alkylgruppen substituiert sein kann. Nur beispielhaft seinen als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-Benzylmaleinimid, N-(1-Naphthyl)maleinimid oder deren Mischungen genannt. Von diesen wird N-Phenylmaleinimid besonders bevorzugt.

Die Halbester leiten sich bevorzugt von primären und sekundären Monoalkoholen, wie Methanol, Ethanol, n- und i-Propanl, n- und i-Butanol, Pentanolen, Hexanolen, Heptanolen, Octanolen, z.B. 2-Ethylhexylalkohol und höheren Alkoholen wie Dodecanolen und cycloaliphatischen Alkoholen, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen.

Ebenfalls geeignet als Komponente $a_3$) sind Amidgruppen enthaltende Monomere mit mindestens einer polymerisierbaren Doppelbindung, vorzugsweise solche der allgemeinen Formeln II oder III

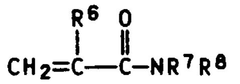 (II)

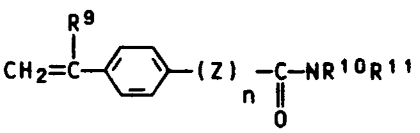 (III),

wobei $R^6$, $R^7$, $R^8$, $R^9$, $R^{10}$ und $R^{11}$ Wasserstoff, Alkyl- oder Alkoxygruppen mit 1 bis 12 C-Atomen, Cycloalkylgruppen mit bis zu 12 C-Atomen oder Arylgruppen und Z Alkenylgruppen mit 1 bis 12 C-Atomen darstellen und n den Wert 0 oder 1, vorzugweise 0 hat.

Bevorzugte Substituenten $R^6$, $R^7$, $R^9$ und $R^{10}$ sind Alkylgruppen mit 1 bis 10 C-Atomen, Cycloalkylgruppen mit bis zu 8 C-Atomen oder Arylgruppen, vorzugsweise Phenyl. $R^4$ und $R^7$ sind bevorzugt H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Nonyl-, N-(2-ethylhexyl)-acrylamid, N-Cyclohexylarylamid, N-Phenylacrylamid, die entsprechenden N,N-Derivate wie N,N-Dimethylacrylamid und die entsprechenden Methacrylamide sowie deren Mischungen genannt.

Bevorzugt werden Acrylamid, Methacrylamid, N-Phenylacrylamid und N-Phenylmethacrylamid verwendet.

Eine weitere Gruppe bevorzugt verwendeter Amid-Gruppen enthaltender Monomerer sind Mono- und Diamide der Dicarbonsäuren, die sich ergeben, wenn in der allgemeinen Formel I (Komponente $a_{31}$) $R^1$ und $R^4$ eine OH-Gruppe darstellen.

Zur Herstellung dieser Mono- und Diamide können die Dicarbonsäuren oder deren Anhydride mit den entsprechenden Aminen umgesetzt werden. Als Amine seien hier nur sekundäure Amine wie N-Methyl- oder N-Ethylalkylamine und N-Alkylaniline, z.B. N-Methylanilin genannt.

Der Anteil der Komponente $a_{32}$) beträgt 0,05 bis 10, vorzugsweise 0,1 bis 10, insbesondere 0,2 bis 5 Gew.%, bezogen auf die Summe der Komponenten $a_1$) bis $a_5$).

Als Komponente $a_3$) kann auch ein Lactam-Gruppen enthaltendes Monomer mit mindestens einer polymerisierbaren Doppelbindung ($a_{33}$) eingesetzt werden.

Vorzugsweise werden Lactame der allgemeinen Struktur IV

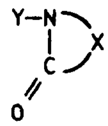 (IV)

verwendet, wobei X eine lineare oder verzweigte Alkylengruppe mit 2 bis 15 C-Atomen darstellt und Y die allgemeinen Formel

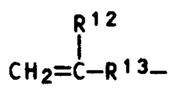

hat,
wobei $R^{12}$ ein Wasserstoffatom, eine Alkyl- oder Alkoxygruppe mit 1 bis 4 C-Atomen und $R^{13}$ einen zweibindigen Substituenten

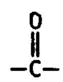

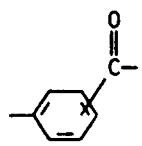

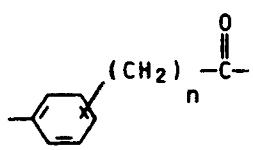 ,

wobei n eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen.

Besonders bevorzugt sind Lactameinheiten, die zu Polyamiden polymerisierbar oder copolymerisierbar sind, wie diese in Houben-Weyl, Methoden der organ. Chemie, Band X/2, S. 511 bis 587, (1958) und Band XIV/2, S. 111 bis 131, beschrieben werden.

Beispielsweise seien genannt:
β-Propiolactame (Azetidin-2-one), wie

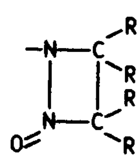

wobei R gleiche oder verschiedene Alkylgruppen mit 1 bis 6 C-Atomen oder Wasserstoff sind. Derartibe Verbindungen sind beschrieben bei R. Graf, Angewandte Chemie, 74, 523 bis 530, (1962) und H. Bastian, Angewandte Chemie, 80, 304 bis 312, (1968).

Nur beispielhaft sei als ein Vertreter dieser Gruppe 3,3'-Dimethyl-3-propiolactam genannt.

Ebenfalls bevorzugte Lactam-Einheiten sind 2-Methylpyrrolidone

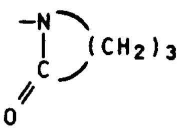

ϵ-Caprolactam, wie

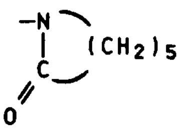

und außerdem 7-Önantholactam, 8-Capryllactam und 12-Laurinlactam wie sie bei K. Dachs, Angewandte Chemie, 74, 540 bis 545, (1962) beschrieben werden. Ganz besonders bevorzugt sind 2-Pyrrolidone und 6-Caprolactame.

Es können auch Mischungen dieser Verbindungen eingesetzt werden.

Vorzugsweise werden die Lactameinheiten über eine Carbonylgruppe am Stickstoff in dem Polyphenylenether A eingebaut, wie dies nachstehend allgemein dargestellt ist.

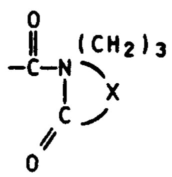

Als besonders bevorzugtes Beispiel einer Komponente $a_{33}$) sei hier nur N-(Meth)acryloyl-ϵ-caprolactam

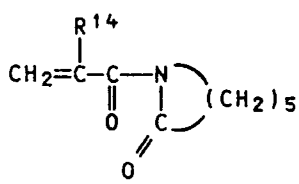

genannt,
wobei $R^{14}$ ein Wasserstoffatom oder eine Methylgruppe sein kann.

Der Anteil der Komponente $a_{33}$) beträgt 0,05 bis 10, vorzugsweise 0,1 bis 10 und insbesondere 0,5 bis 5 Gew.%, bezogen auf die Summe der Komponenten $a_1$) bis $a_5$).

Gegebenenfalls können bei der Herstellung des modifizierten Polyphenylenethers A auch weitere Comonomere $a_4$) eingesetzt werden, die unter den Herstellungsbedingungen mit den Komponenten $a_1$) und $a_2$) reagieren bzw. auf diese aufpfropfen. Beispielsweise seien hier Acrylsäure, Methacrylsäure, Acrylate, Methacrylate und vinylaromatische Monomere wie Styrol, α-Methylstyrol und Vinyltoluol genannt, um nur einige aufzuführen.

Der Anteil der Komponente $a_4$) beträgt 0 bis 45 und insbesondere nicht mehr als 20 Gew.%, bezogen auf die Summe der Komponenten $a_1$) bis $a_5$). Besonders bevorzugt werden Formmassen, die keine Komponente $a_4$) enthalten.

Als Komponente $a_5$) können bei der Herstellung der modifizierten Polyphenylenether A) bis zu 20 Gew.% an Radikalstartern eingesetzt werden.

Der Anteil der Komponente $a_5$) ist in der Regel geringer als die Summe der Anteile der Komponenten $a_3$) und $a_4$). Vorzugsweise handelt es sich dabei um ein organisches Peroxid oder eine Azo-Verbindung.

Besonders bevorzugt sind organische Peroxide mit einer Halbwertzeit im Bereich von 1 bis 30 sec. bei 200 ° C. Die Wahl des Radikalstarters richtet sich nach der gewünschten Reaktionstemperatur.

Beispielsweise seien als Radikalstarter genannt:
Di-(2,4-dichlorbenzoyl)peroxid, tert.-Butylperoxid, Di-(3,5,5-trimethylhexanol)peroxid, Di-lauroylperoxid, Di-decanoylperoxid, Di-propionylperoxid, Di-benzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvalerisansäure-butylester, 2,2-Di-tert.-butylperoxybutan, Di-cumylperoxid, tert.-Butylcumylperoxid, 1,3-Di(tert.-butylperoxyisopropyl)benzol, Di-tert.-butylperoxid, Di-isopropylbenzolmonohydroperoxid, Cumolhydroperoxid, tert.-Butylhydroperoxid, 2,2-Azo-di(2,4-dimethylvaleronitril), Azo-bis-isobutyronitril, wobei Dicumylperoxid besonders bevorzugt wird.

Häufig hat es sich als besonders vorteilhaft erwiesen, ohne große Anteile der Komponente $a_5$) zu arbeiten. Demzufolge beträgt der Anteil der Radikalstarter vorzugsweise 0,01 bis 0,09 insbesondere 0,02 bis 0,08 und insbesondere 0,03 bis 0,07 Gew.%, bezogen auf das Gesamtgewicht der Komponenten $a_1$ bis $a_5$. Dies gilt insbesondere dann, wenn als Komponente $a_3$) Fumarsäure ($a_{31}$) eingesetzt wird, da hier bei der Verwendung von größeren Mengen an Radikalstartern unter Umständen unerwünschte Nebenreaktionen auftreten können.

Zum modifizierten Polyphenylenether A werden in mindestens einer weiteren Zone

B) 5 bis 95 Gew.% eines Polyamids
C) 0 bis 90 Gew.% eines nicht modifizierten PPE
D) 0 bis 45 Gew.% eines vinylaromatischen Polymeren
E) 0 bis 40 Gew.% eines schlagzäh modifizierenden Kautschuks
F) D bis 60 Gew.% Zusatzstoffe und Verarbeitungshilfsmittel,

wobei sich die Angaben in Gewichtsprozent auf das Gesamtgewicht der Komponenten A - F beziehen, gemeinsam oder über mehrere Einspeiseöffnungen in verschiedenen Zonen zugegeben.

Bevorzugt erfolgt die Dosierung mit einem Seitenextruder mit temperierbarem Mantel, in den die Komponenten 8-F eindosiert, aufgeschmolzen und dem Anfang der zweiten Zone des Extruders zugeführt werden.

Im allgemeinen ist der Schneckendurchmesser des Seitenextruders geringer als der des Hauptextruders und die Schneckenlänge liegt im Bereich von 5 bis 40 D, vorzugsweise von 10 bis 20 D. Die Temperatur bei der Dosierung in den Hauptextruder liegt im Bereich von 250 bis 350 ° C, vorzugsweise von 260 bis 320 ° C. Die Schnecke des Seitenextruders kann so gestaltet sein. daß die Komponenten vor der Dosierung in den Hauptextruder bereits vorgemischt sind. Vorzugsweise werden die Komponenten im Seitenextruder aufgeschmolzen.

Die Zone des Hauptextruders, in denen dann der modifizierte Polyphenylenether A mit den aus dem Beginn der zweiten Zone zudosierten Komponenten abgemischt wird, hat im allgemeinen eine Länge von 5 bis 40 D, vorzugsweise von 10 bis 20 D. Die Temperatur liegt im gleichen Bereich wie bei der Zudosierung der Komponenten B-F. Die mittleren Verweilzeiten in dieser Zone betragen im allgemeinen 0,1 bis 10, vorzugsweise 0,5 bis 5 min.

In manchen Fällen ist es vorteilhaft, nicht alle Komponenten B-F gleichzeitig dem Hauptextruder zuzuführen. In diesem Fall können sich an die zweite Zone des Hauptextruders noch eine oder mehrere gleich aufgebaute Zonen anschließen, in die über Einspeiseöffnungen die Komponenten B-F zugegeben werden können. Auch in diesen Fällen erfolgt die Dosierung in den Hauptextruder über Seitenextruder, deren Aufbau der vorstehend beschriebenen Form entspricht oder bei Füllstoffen, wie Glasfasern über eine oberseitige Öffnung. Es können auch noch Substanzen zugepumpt werden.

Aufbau und Abmessungen der weiteren Zonen des Hauptextruders, in die Komponenten eingeführt werden, entsprechen den Daten der zweiten Zone.

Besonders bei der Zugabe von Kautschuken, Verarbeitungshilfsmitteln und anderen, an sich bekannten Zusatzstoffen ist es häufig vorteilhaft, einen Extruder mit mehr als zwei Zonen zu verwenden.

Insbesondere ist es von Vorteil, daß man die Komponenten E und/oder F in einer dritten Zone im Anschluß an die in der zweiten Zone zugegebenen Komponenten B, C und D zugibt.

Nachfolgend werden die Komponenten B-F, die dem modifizierten PPE über eine oder mehrere Einspeiseöffnungen zudosiert werden können, beschrieben.

Als Komponente B werden 5 bis 95 Gew.% mindestens eines Polyamids zudosiert. Geeignet sind lineare Polyamide z.B. mit einer relativen Viskosität von 2,2 bis 4,5, gemessen in 1 gew.-%iger Lösung in 96 gew.-%iger Schwefelsäure bei 23 ° C. Bevorzugt seien genannt Polyamide, die sich von Lactamen mit 7 bis 13 Ringgliedern ableiten, wie Polycaprolactam, Polycapryllactam oder Polyaurinlactam sowie Polyamide, die durch Umsatz von Dicarbonsäuren mit Diaminen erhalten werden. Beispiele hierfür sind Polyamid-6,6,

Polyamid-6,12 und das in der EP-A 39 524 beschriebene Polyamid-4,6. Geeignete Dicarbonsäuren, sind beispielsweise Alkandicarbonsäuren mit 5 bis 12, insbesondere 6 bis 10 Kohlenstoffatomen sowie Terephthalsäure und Isophthalsäure sowie beliebige Mischungen dieser Säuren.

Als Diamine, seien beispielsweise Alkandiamine mit 4 bis 12, insbesondere 4 bis 8 Kohlenstoffatomen, ferner m-Xylylendiamin, Bis(k-aminophenyl)-methan,Bis(4-aminocyclohexyl)methan oder Bis(4-aminophenyl)propan-2,2 oder deren Mischungen genannt.

Es ist auch möglich und manchmal vorteilhaft Mischungen der genannten Polyamide zu verwenden. Besondere technische Bedeutung haben Polyamid-6 (Polycaprolactam), Polyamid-66 (Polyhexamethylenadipinamid) sowie Polyamide, die aus Hexamethylendiamin und Isophthalsäure sowie Terephthalsäure aufgebaut sind, erlangt.

Bevorzugte Formmassen enthalten 5 bis 80 Gew.-%, insbesondere 25 bis 70 Gew.-% an thermoplastischen Polyamiden.

Manchmal ist es vorteilhaft, als Komponente C) einen nichtmodifizierten Polyphenylenether zuzugeben. Dieser entspricht bevorzugt dem als Komponente $a_1$) eingesetzten Polyphenylenether, weshalb hier auf die dortigen Ausführungen zu geeigneten Verbindungen verwiesen wird. Der Anteil der Komponente C beträgt, falls vorhanden, maximal 90, vorzugsweise weniger als 50 Gew.%, bezogen auf die Summe der Komponenten A) bis F).

Als weiterer Bestandteil D) können gegebenenfalls in einer Menge bis zu 45, vorzugsweise bis zu 30 Gew.%, vinylaromatische Polymere (bezogen auf die Summe des Komponenten A) bis F)) zugegeben werden. Geeignet sind bevorzugt mit Polyphenylenethern verträgliche Polymere, wie sie bereits als Komponente $a_2$) beschrieben wurden. Für nähere Einzelheiten sei deshalb auf die Ausführungen zur Komponente $a_2$) verwiesen.

Die Komponente D) kann auch schlagzäh modifiziert sein. Solche Polymere sind dem Fachmann als schlagzähes Polystyrol (HIPS) bekannt. Dabei werden die vinylaromatischen Polymeren in Gegenwart eines Schlagzähmodifiers hergestellt oder die vinylaromatischen Polymeren mit gepfropften Kautschuken abgemischt. Als kautschukartige Polymere seien beispielsweise genannt Polybutadien-, Styrolbutadien-, Styrol-b-butadien, Acrylnitrilbutadien, Ethylenpropylen-, Polyacrylat- und Polyisopren-Kautschuk genannt.

Neben den in der Komponente D) gegebenenfalls vorhandenen, gepfropften Kautschuken, wie Polybutadien-, Acrylat-, Styrol/Butadien-, Polybuten-Kautschuk, hydrierten Styrol/Butadien-, Acrylnitril/Butadien-, Ethylen/Propylen- und Polyisopren-Kautschiken können diese auch ungepfropft als Komponente E) zugesetzt werden. Als Kautschuke E) seien weiter erwähnt styrolgepfropfte Ethylen/Propylen-Kautschuke, thermoplastische Ethylen-Propylen-Kautschuke, thermoplastische Polyester-Elastomere, Ethylenkautschuke und Ionomere, besonders bevorzugt Styrol-Butadien-Blockcopolymere einschließlich AB-, ABA-, ABA-verschmiert (taper)-, ABAB-, ABAB-verschmierte Stern-Block-Copolymere und ähnliche, analoge Isopren-Blockpolymerisate und (teil)hdyrierte Blockcopolymere.

Die Komponente E) kann in Mengen bis 45, vorzugsweise bis zu 30 Gew.%, bezogen auf die Summe der Komponenten A) bis F), zum modifizierten PPE zugegeben werden.

Neben den Komponenten A) bis E) können die erfindungsgemäßen thermoplastischen Formmassen auch übliche Zusatzstoffe und Verarbeitungshilfsmittel F) enthalten. Der Anteil dieser Zusätze beträgt im allgemeinen nicht mehr als 60, insbesondere nicht mehr als 40 Gew.%, bezogen auf das Gesamtgewicht der Komponenten A) bis F).

Als Zusatzstoffe seien genannt Hitze- und Lichtstabilisatoren, Gleit-und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum, Kreide, ferner Flammschutzmittel, wie Phosphorverbindungen, wie Phosphat, Phosphorsäureester, Phosphorigsäureester, Phosphinsäureester, Phosphonigsäureester oder organische Phosphinoxide, Halogenverbindungen, ggf. in Kombination mit Synergisten wie Antimontrioxid.

Auch niedermolekulare oder hochmolekulare Polymere kommen als Zusatzstoffe in Betracht.

Über Art und Menge dieser Zusatzstoffe lassen sich die gewünschten Eingenschaften der Endprodukte in weitem Maße steuern. Es ist prinzipiell auch möglich, Zusatzstoffe und Verarbeitungshilfsmittel bereits bei der Umsetzung der Komponenten $a_1$ bis $a_5$ zuzugeben.

Es sei nochmals darauf hingewiesen, daß die Komponenten B-F gemeinsam in einer Zone oder aber zunächst nur B und dann die Komponenten C-F in beliebiger Reihenfolge in einer oder mehreren Zonen über Einspeisungseinrichtungen dem Hauptextruder zugeführt werden können.

Nach der Zugabe aller Komponenten und deren Abmischung in den verschiedenen erwähnten Zonen des Hauptextruders kann vorteilhaft in einer weiteren Zone eine Entgasung durchgeführt werden. Geeignete apparative Ausführungsformen solcher Entgasungszonen sind an sich bekannt. Die Länge dieser Zone

beträgt vorzugsweise von 3 bis 10 D, die Temperatur liegt im Bereich von 250 bis 300 ° C. Bevorzugt wird die Entgasung durch Anlegen eines Vakuums unterstützt.

Nach der Entgasung wird die nach dem Verfahren hergestellte Mischung aus dem Extruder ausgetragen und anschließend in an sich bekannter Weise weiterverarbeitet.

Die nach dem erfindungsgemäßen Verfahren erhaltenen Produkte zeichnen sich durch eine besondere helle Eigenfarbe und eine hohe multiaxiale Zähigkeit aus. Ein weiterer Vorteil des erfindungsgemäßen Verfahrens besteht darin, daß in einem Arbeitsgang die Modifizierung des PPE und die Abmischung mit den anderen Komponenten möglich ist, was die thermische Belastung des PPE verringert.

Beispiele 1 bis 12

Zur Durchführung des Verfahrens wurde ein Zweischneckenextruder mit drei Zonen eingesetzt (Fa. Werner und Pfleiderer). Der Schneckendruchmesser betrug 53 mm. Die Längen der einzelnen Zonen sind in Vielfachen des Schneckendurchmessers (D) angegeben.

Die erste Zone des Extruders war 15 D lang und hatte am Anfang eine Einspeiseöffnung für feste Substanzen $a_1$ bis $a_3$. Diese Substanzen wurden über Dosierwaagen zugeführt. Unter der Einspeiseöffnung waren die Schneckenelemente förderwirksam ausgestaltet, dieser Zonenteil (3D) wurde gekühlt auf 20 ° C. Der nächste Zonenteil (3D) wurde auf 240 ° C erhitzt. Der Rest der ersten Zone (9D) hatte eine Temperatur von 280 ° C. Im mittleren teil der ersten Zone befanden sich Knetelemente auf der Schnecke. Am Ende der Schnecke war ein zurückförderndes Element eingebaut.

Die zweite Zone des Extruders war 15 D lang und hatte am Anfang seitlich eine Einspeiseöffnung. Der Rest der zweiten Zone war außer zur Entgasungszone hin geschlossen. Die Komponenten B, D, E und F wurden durch die seitliche Einspeiseöffnung in die zweite Zone mit einem Seitenextruder zugeführt. Die zweite Zone wurde auf 285 ° C erhitzt. Die Schnecke trug Knetelemente.

Der Seitenextruder war ein Zweischneckenextruder mit einem Schneckendurchmesser von 30 mm und 17 D Länge. Die Temperaturen der Extrudermäntel des Seitenextruders betrungen 280 ° C. Am Anfang des Seitenextruders wurden die Substanzen durch Dosierwaagen zugeführt und am Ende des Seitenextrudes in die seitliche Einspeiseöffnung der zweiten Zone zugeführt.

Die Entgasungszone des Extruders war 6D lang und hatte am Anfang eine Entgasungsöffnung an die ein Vakuum von 100 Torr angelegt wurde. Im zweiten Teil der Entgasungszone wurde ein Druck aufgebaut um das Produkt über eine Lochdüse auszutragen. Das Produkt wurde durch ein Wasserbad gezogen und anschließend granuliert und getrocknet.

Im einzelnen wurden folgende Komponenten eingesetzt.

- $a_1$: Poly-(2,6-dimethyl-1,4-phenylen)-ether (mit einer relativen Viskosität von 0,60, gemessen in 1 gew. %iger $CHCl_3$-Lösung bei 25 ° C)
- $a_2/1$: Polystyrol PS 144 C, Fa. BASF, MFI 200/5,0 = 24 g/10 Min.
- $a_2/2$: Oligomeres Polystyrol mit $M_w$ = 5000 (entspricht Komponenete D in Beispiel 2)
- $a_2/3$: Copolymeres aus Vinyltoluol und Methylstyrol ($M_w$ = 5000): (Picotex 120 der Fa. Hercules)
- $a_3/1$: Fumarsäure
- $a_3/2$: Maleinsäureanhydrid (MSA)
- $a_3/3$: Maleinsäurediethylester
- $a_3/4$: Mischung (jeweils 50 Gew.%) MSA + Methylmethacrylat
- B/1: Polyamid-6,6 mit einer relativen Viskosität von 3,4
- B/2: Polyamid-6 mit relativen Viskosität von 3,1
- D: entspricht Komponente $a_2/2$
- E/1: Styrol-Butadien-Styrol-Blockpolymerisat, hergestellt durch anionische Polymerisation (32 Gew.% Styrol, 68 Gew.% Butadien) mit $M_w$ = 95 000
- E/2: Styrol-Butadien(hydriert)-Styrol-Blockkautschuk, hergestellt durch anionische Polymerisation mit anschließender Hydrierung des Polybutadienblocks mit 35 Gew.% Styrol, 65 Gew.% Butadien (hydriert) mit $M_w$ = 65 000
- E/3: Ethylenpolymeres aus 70 Gew.% Ethylen, 29 % n-Butylacrylat und 1 Gew.% Maleinsäureanhydrid mit einem MFI von 20 g/10 Min.
- E/4: Butadien-Kautschuk, hergestellt durch Emulsionspolymerisation von zuerst 70 Gew.% Butadien, gefolgt von 30 Gew.% Styrol als Teilchenschale.
- F/1: $SiO_2$
- F/2: Polyethylenwachs

In Tabelle 1 sind die Einsatzmengen der Komponenten angegeben.

Tabelle 1 (alle Angaben in Gew.%)

| Beispiel Nr. | 1 | 2 | 3 | 4 | 5 | 6 | 7 | 8 | 9 |
|---|---|---|---|---|---|---|---|---|---|
| Erste Zone | | | | | | | | | |
| $a_1$ | 26,3 | 38,5 | 36,3 | 40,6 | 40,1 | 40,1 | 40,1 | 40,1 | 39,5 |
| $a_2$ | 8,7 $a_2$/1 | 4,3 $a_2$/2 | 4,5 $a_2$/2 | - | 1,8 $a_2$/1 | 1,8 $a_2$/1 | 1,8 $a_2$/1 | 1,8 $a_2$/1 | 1,7 $a_2$/1 |
| $a_3$ | 0,2 $a_3$/1 | 0,9 $a_3$/2 | 0,2 $a_3$/1 | 0,6 $a_3$/1 | 0,2 $a_3$/1 | 0,2 $a_3$/1 | 0,2 $a_3$/3 | 0,2 $a_3$/1 | 0,2 $a_3$/1 |
| F/1 | 1,7 F/1 | 1,7 F/2 | - | - | - | - | - | - | - |
| Zweite Zone | | | | | | | | | |
| B | 52,7 B/1 | 42,7 B/1 | 50,0 B/2 | 49,7 B/2 | 47,3 B/1 | 47,3 B/1 | 47,3 B/1 | 47,3 B/1 | 46,5 B/1 |
| D | - | 5,1 | - | - | - | - | | | |
| E | 8,7 E/1 | 6,8 E/1 | 9,0 E/1 | 9,1 E/2 | 10,6 E/1 | 10,6 E/1 | 10,6 E/1 | 10,6 E/2 | 7,0 E/1<br>5,1 E/3 |
| F | 1,7 F/1 | - | - | - | - | - | | | |
| Schnecken-drehzahl [1/min] | | | | | | | | | |
| Hauptextruder | 170 | 150 | 180 | 180 | 200 | 200 | 200 | 200 | 200 |
| Seitenextruder (zweite Zone) | 200 | 200 | 200 | 200 | 200 | 200 | 200 | 200 | 200 |

Tabelle 1 (alle Angaben in Gew.%) Forts.

| Beispiel Nr. | 10 | 11 | 12 |
|---|---|---|---|
| Erste Zone | | | |
| $a_1$ | 40,1 | 40,1 | 40,0 |
| $a_2$ | 1,8 $a_2$/1 | 1,8 $a_2$/1 | 1,7 $a_2$/1 |
| $a_3$ | 0,2 $a_3$/3 | 0,2 $a_3$/2 | 0,4 $a_3$/4 |
| F/1 | - | - | - |
| Zweite Zone | | | |
| B | 47,3 B/1 | 47,3 B/1 | 47,3 B/1 |
| D | | | |
| E | 10,6 E/4 | 10,6 E/4 | 10,6 E/1 |
| F | | | |
| Schnecken-drehzahl [1/min] | | | |
| Hauptextruder | 200 | 200 | 200 |
| Seitenextruder (zweite Zone) | 200 | 200 | 200 |

Vergleichsbeispiele zu den Beispielen 3, 5 und 6

Vergleichsbeispiele 3.1, 5.1 und 6.1

Die Komponenten $a_1$-$a_3$, B und D wurden alle zusammen in die erste Zone des Hauptextruders dosiert und auf dem Hauptextruder abgemischt.

Vergleichsbeispiele 3.2, 5.2 und 6.2

Die Komponenten $a_1$-$a_3$ wurden in die erste Zone dosiert und über den Hauptextruder gefahren, ausgetragen und granuliert. In einem zweiten Durchgang wurden die Komonenten B und D mit dem Granulat in die erste Zone dosiert, über den Hauptextruder gefahren und abgemischt.

Vergleichsbeispiele 3.3, 5.3 und 6.3

Die Komponenten $a_1$ und $a_3$ (ohne die Komponente $a_2$) wurden in die erste Zone dosiert und B und D in die zweite Zone dosiert.

Vergleichsbeispiel 3.4, 5.4 und 6.4

Die Komponenten $a_1$ und $a_3$ wurden in die erste Zone und die Komponenten $a_2$, B und D in die zweite Zone dosiert und auf dem Hauptextruder abgemischt.

Die Ergebnisse der Messungen der Schlagzähigkeit (nach DIM 53 453), der Kerbschlagzähigkeit (nach DIN 53 453) und der Durchstoßarbeit (nach DIN 53 443) sind in Tabelle 2 aufgeführt. Die entsprechenden Prüfkörper wurden im Spritzguß hergestellt.

Tabelle 2 (V = Vergleichsversuche)

| Beispiel Nr. | DIN 53453 Schlagzähigkeit $kJ/m^2$ | DIN 53453 Kerbschlagzähigkeit $kJ/m^2$ | DIN 53453 Durchstoßarbeit Nm | Farbe |
|---|---|---|---|---|
| 1 | kein Bruch | 22 | 50 | fast weiß |
| 2 | kein Bruch | 16 | 29 | gelb |
| 3 | kein Bruch | 25 | 57 | hellgelb |
| 3.1V | 24 | 4,1 | < 5 | braun |
| 3.2V | kein Bruch | 14 | 38 | braun |
| 3.3V | 7 | 1,1 | < 5 | braun |
| 3.4V | 15 | 3,0 | < 5 | dunkelbraun |
| 4 | kein Bruch | 20 | 48 | hellgelb |
| 5 | kein Bruch | 28 | 64 | hellgelb |
| 5.1V | 20 | 3,7 | < 5 | braun |
| 5.2V | kein Bruch | 18 | 34 | braun |
| 5.3V | 10 | 2,0 | < 5 | braun |
| 5.4V | 20 | 5,0 | < 5 | dunkelbraun |
| 6 | kein Bruch | 18 | 48 | gelb |
| 6.1V | 10 | 2,0 | < 5 | dunkelbraun |
| 6.2V | kein Bruch | 9 | 36 | braun |
| 6.3V | 7 | 2,1 | < 5 | braun |
| 6.4V | 15 | 1,3 | < 5 | dunkelbraun |
| 7 | kein Bruch | 19 | 50 | gelb |
| 8 | kein Bruch | 22 | 58 | hellgelb |
| 9 | kein Bruch | 15 | 45 | hellgelb |
| 10 | kein Bruch | 17 | 40 | hellgelb |
| 11 | kein Bruch | 13 | 32 | hellgelb |
| 12 | kein Bruch | 15 | 43 | hellgelb |

Beispiele 13 bis 16

In diesen Beispielen wurde ein Zweischneckenextruder mit 4 Zonen und einem Schneckendurchmesser von 53 mm eingesetzt. Die erste Zone hatte eine Länge von 20 D und entsprach in ihrem Aufbau der ersten Zone des Extruders in den Beispielen 1 bis 12. Die zweite Zone war 12 D lang und entsprach im übrigen der zweiten Zone des Extruders der Beispiele 1 bis 12.

Die dritte Zone war 6 D lang und hatte am Anfang eine Einspeiseöffnung, über der sich ein mit $N_2$ durchspülter, nach oben offener Dom befand. Die Substanzen E und F wurden über Dosierwaagen

zugeführt, Glasfasern wurden über die Schnecke des Hauptextruders eingezogen.

Die vierte Zone (Entgasungszone) entspricht der das Extruders in den Beispielen 1 bis 12.

Tabelle 3 ist zu entnehmen, wie die einzelnen Komponenten abgemischt wurden.

Die Komponenten $a_1$, $a_2$, $a_3$, B und E entsprechend den in den Beispielen 1 bis 12 eingesetzten Komponenten.

Zusätzlich wurden eingesetzt:

| | |
|---|---|
| $a_4$: | Acrylsäure |
| F/3 | Talkum |
| F/5 | Glasfasern |
| F/6 | Titandioxid |
| F/7 | Tris-(nonylphenyl)phosphat |
| F/8 | Zinkoxid |
| F/9 | Zinksulfid |
| F/10 | Kaolin |

Tabelle 3 (alle Angaben in Gew.%)

| | Beispiel 13 | Beispiel 14 | Beispiel 15 | Beispiel 16 |
|---|---|---|---|---|
| **Zone 1** | | | | |
| Schneckendrehzahl [1/min] | 220 | 220 | 220 | 250 |
| $a_1$ | 17,73 | 23,5 | 29,7 | 45,9 |
| $a_2$ | 14,20 | - | 0,8 $a_2$/1 | 1,3 $a_2$/2 |
| $a_3$ | 0,70 $a_3$/3 | 0,7 $a_3$/1 | 0,8 $a_3$/1 | 0,7 $a_3$/1 |
| $a_4$ | 0,07 $a_4$ | - | - | - |
| F | - | 2,0 F/2 | - | - |
| **Zone 2** | | | | |
| B | 39,0 B/1 | 43,6 B/1 | 55,1 B/1 | 16,5 B/1 |
| D | | | | 8,2 |
| E | 7,0 E/1 | 6,7 E/2 | 8,5 E/1 | 16,5 E/2 |
| F | 1,40 F/3 | 2,0 F/3 | - | |
| Schneckendrehzahl (1/min) (Seitenextruder) | 200 | 200 | 200 | 100 |
| **Zone 3** | | | | |
| B | 1,4 B/1 | - | - | - |
| E | | 6,7 E/3 | - | - |
| F | 17,7 F/5 | 13,4 F/10 | 2,5 F/7 | 4,9 F/7 |
| | | 1,4 F/6 | 1,7 F/6 | 1,6 F/8 |
| | | | 0,9 F/8 | 0,8 F/9 |

Vergleichsbeispiele zu Beispiel 15

Vergleichsbeispiel 15.1

Die Komponenten $a_1$-$a_3$, B, D und E wurden alle zusammen in die erste Zone dosiert und auf dem Hauptextruder abgemischt, die Komponente F wurde in die dritte Zone dosiert.

Vergleichbeispiel 15.2

Die Komponenten $a_1$-$a_3$ wurden in die erste Zone dosiert, über den Hauptextruder gefahren, ausgetragen und granuliert. In einem zweiten Durchgang wurden die Komponenten B, D und E mit dem Granulat der Abmischung, hergestellt aus $a_1$-$a_3$, in die erste Zone dosiert, die Komponenten F wurden in die dritte Zone dosiert und im Hauptextruder abgemischt.

Vergleichsbeispiel 15.3

Die Komponenten $a_1$ und $a_2$ ohne die Komponente $a_3$ wurden in die erste Zone dosiert, B, D und E wurden in die zweite Zone und die Komponenten F in die dritte Zone dosiert.

Vergleichsbeispiel 15.4

Die Komponenten $a_1$ und $a_2$ wurden in die erste Zone und die Komponenten $a_3$ und B, D und E in die zweite Zone dosiert, die Komponenten F wurden in die dritte Zone dosiert.

Die Ergebnisse der Messungen sind der Tabelle 4 zu entnehmen.

Tabelle 4 (V = Vergleichsversuche)

| Beispiel Nr. | DIN 53 453 Schlagzähigkeit kJ/m² | DIN 53 453 Kerbschlagzähigkeit kJ/m² | DIN 53 453 Durchstoßarbeit Nm | Farbe |
|---|---|---|---|---|
| 13 | 60 | 18 | - | weiß |
| 14 | 56 | 8 | - | weiß |
| 15 | kein Bruch | 28 | 50 | weiß |
| 15.1 V | 10 | 2,1 | < 5 | hellbraun |
| 15.2 V | kein Bruch | 10 | 22 | braun |
| 15.3 V | 11 | 2,5 | < 5 | hellbraun |
| 15.4 V | 17 | 2,0 | < 5 | hellbraun |
| 16 | kein Bruch | 18 | 39 | weiß |

Beispiele 17 bis 28

Die Beispiele 1 bis 12 wurden wiederholt, jedoch zusätzlich bei der Umsetzung in der ersten Zone 0,05 Gew.% tert.-Butylhydroperoxid eingesetzt, wodurch sich der Anteil an PPE ($A_1$) entsprechend um 0,05

Gew.% verringerte. Ansonsten entsprechen die Zusammensetzungen der Beispiele 17 bis 28 denen der Beispiele 1 bis 12 (in dieser Reihenfolge, d.h. 17 ≙ 1, 18 ≙ 2, ... etc.).

Nach Extrusion, Granulierung und Trocknung wurde wie in den Beispielen 1 bis 12 im Spritzguß Prüfkörper hergestellt und die mechanischen Eigenschaften bestimmt.

Die Ergebnisse dieser Messungen sind der Tabelle 5 zu entnehmen.

Tabelle 5

| Beispiel Nr. | DIN 53453 Schlagzähigkeit $kJ/m^2$ | DIN 53453 Kerbschlagzähigkeit $kJ/m^2$ | DIN 53453 Durchstoßarbeit Nm |
|---|---|---|---|
| 17 | kein Bruch | 23,7 | 53 |
| 18 | kein Bruch | 16,5 | 31 |
| 19 | kein Bruch | 26,8 | 60 |
| 20 | kein Bruch | 22,4 | 51 |
| 21 | kein Bruch | 30,1 | 68 |
| 22 | kein Bruch | 18 | 50 |
| 23 | kein Bruch | 20,0 | 52 |
| 24 | kein Bruch | 21,9 | 59 |
| 25 | kein Bruch | 16,5 | 47 |
| 26 | kein Bruch | 19,0 | 43 |
| 27 | kein Bruch | 14,0 | 34 |
| 28 | kein Bruch | 17,0 | 46 |

## Patentansprüche

**1.** Kontinuierliches Verfahren zur Herstellung von thermoplastischen Formmassen auf der Basis von Polyphenylenethern (PPE) und Polyamiden in einem Extruder, dadurch gekennzeichnet, daß man

I) in einer ersten Zone bei Temperaturen von 240 bis 350 °C

$a_1$) 50 bis 99,95 Gew.% eines Polyphenylenethers

$a_2$) 1 bis 35 Gew.% eines vinylaromatischen Polymeren

$a_3$) 0,05 bis 10 Gew.%

$a_{31}$) einer $\alpha,\beta$-ungesättigten Carbonsäure oder deren Derivaten der allgemeinen Formel I

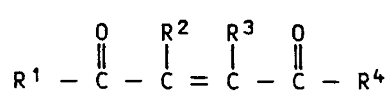

(I)

wobei

$R^1$ und $R^4$ Hydroxylgruppen, Aryloxy-, Alkoxy-, Aralkoxy- oder Cycloalkoxygruppen mit bis zu 12 C-Atomen oder gemeinsam -O- oder -$NR^5$-,

$R^2$ und $R^3$ Wasserstoff, eine Alkyl- oder Cycloalkylgruppe mit bis zu 12 C-Atomen, eine Arylgruppe, Chlor, oder gemeinsam eine Alkylengruppe mit 4 bis 12 C-Atomen,

$R^5$ Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können,

darstellen, und/oder

$a_{32}$) eines Amid-Gruppen enthaltenden Monomeren mit einer polymerisierbaren Doppelbindung, und/oder

$a_{33}$) eines Lactam-Gruppen enthaltenden Monomeren mit einer polymerisierbaren Doppelbindung

sowie darüber hinaus

$a_4$) 0 bis 45 Gew.% weiterer pfropfaktiver Monomerer und

$a_5$) 0 bis 20 Gew.% eines Radikalstarters

wobei die Angaben in Gew.% sich jeweils auf das Gesamtgewicht der Komponenten $a_1$ bis $a_5$ beziehen,

über einen Zeitraum von 0,1 bis 15 min. umsetzt und einen modifizierten Polyphenylenether A herstellt,

und

II) anschließend in mindestens einer weiteren Zone des Extruders bei 250 bis 350 °C

B) 5 bis 95 Gew.% eines Polyamids

C) 0 bis 90 Gew.% eines nicht modifizierten Polyphenylenethers

D) 0 bis 45 Gew.% eines vinylaromatischen Polymeren

E) 0 bis 40 Gew.% eines schlagzäh modifizierenden Kautschuks

F) 0 bis 60 Gew.% Zusatzstoffe und Verarbeitungshilfsmittel,

wobei sich die Angaben in Gewichtsprozent auf das Gesamtgewicht der Komponenten A-F beziehen, zusetzt, und die so erhaltene Mischung extrudiert.

**2.** Verfahren nach Anspruch 1, dadurch gekennzeichnet, daß man bei der Umsetzung in der ersten Zone 0,01 bis 0,09 Gew.% eines Radikalstarters $a_5$ einsetzt.

**3.** Verfahren nach den Ansprüchen 1 und 2, dadurch gekennzeichnet, daß man die Komponenten E und/oder F in einer dritten Zone im Anschluß an die in der zweiten Zone zugegebenen Komponenten B, C und D zugibt.

**4.** Verfahren nach den Anspruchen 1 bis 3, dadurch gekennzeichnet, daß man die Mischung der Komponenten A bis F in einer weiteren Zone des Extruders entgast.

## Claims

**1.** A continuous process for the preparation of a thermoplastic molding material based on polyphenylene ethers (PPE) and polyamides in an extruder, wherein

I) in a first zone at from 240 to 350 °C,

$a_1$) from 50 to 99.95% by weight of a polyphenylene ether,

$a_2$) from 0 to 35% by weight of a vinylaromatic polymer,

$a_3$) from 0.05 to 10% by weight

$a_{31}$) of an $\alpha,\beta$-unsaturated carboxylic acid or its derivatives of the general formula I

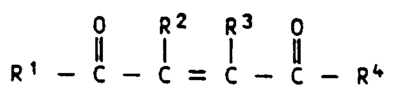

(I)

where $R^1$ and $R^4$ are each hydroxyl or aryloxy, alkoxy, aralkoxy or cycloalkoxy, each of not more than 12 carbon atoms, or together form -O- or -$NR^5$-, $R^2$ and $R^3$ are each hydrogen, alkyl or cycloalkyl, each of not more than 12 carbon atoms, aryl or chlorine, or together form alkylene of 4 to 12 carbon atoms, $R^5$ is hydrogen or alkyl, cycloalkyl, aralkyl or aryl, each of not more than 12 carbon atoms, which in turn may be substituted by $C_1$-$C_4$-alkyl or -alkoxy, and/or

$a_{32}$) of a monomer containing amide groups and a polymerizable double bond, and/or

$a_{33}$) of a monomer containing lactam groups and a polymerizable double bond,

and in addition,

$a_4$) from 0 to 45% by weight of further graft monomers and

$a_5$) from 0 to 20% by weight of a free radical initiator, the percentages by weight in each case being based on the total weight of the components $a_1$ to $a_5$,

are reacted for from 0.1 to 15 minutes, and a modified polyphenylene ether A is prepared,

and

II) then, in one or more further zones of the extruder at from 250 to 350 °C
B) from 5 to 95% by weight of a polyamide,
C) from 0 to 90% by weight of a nonmodified polyphenylene ether,
D) from 0 to 45% by weight of a vinylaromatic polymer,
E) from 0 to 40% by weight of a rubber impact modifier
and
F) from 0 to 60% by weight of additives and processing assistants,
the percentages by weight being based on the total weight of components A-F,
are added, and the resulting mixture is extruded.

**2.** A process as claimed in claim 1, wherein from 0.01 to 0.09% by weight of a free radical initiator $a_5$ is used in the reaction in the first zone.

**3.** A process as claimed in claim 1 or 2, wherein the components E and/or F are added in a third zone, after the components B, C and D added in the second zone.

**4.** A process as claimed in any of claims 1 to 3, wherein the mixture of components A to F is devolatilized in a further zone of the extruder.

## Revendications

**1.** Procédé de préparation en continu de masses à mouler thermoplastiques à base de poly-(oxyphénylènes) (PPO) et de polyamides dans une extrudeuse, caractérisé en ce que
I) dans une première zone à une température de 240 à 350 °C, on met en réaction, pendant une période de 0,1 à 15 mn,
$a_1$) 50 à 99,95% en poids d'un poly(oxyphénylène),
$a_2$) 1 à 35% en poids d'un polymère vinylaromatique,
$a_3$) 0,05 à 10% en poids
$a_{31}$) d'un acide carboxylique $\alpha,\beta$-insaturé ou de dérivés de celui-ci de formule générale I

$$R^1 - \overset{\overset{O}{\|}}{C} - \overset{\overset{R^2}{|}}{C} = \overset{\overset{R^3}{|}}{C} - \overset{\overset{O}{\|}}{C} - R^4 \qquad (I)$$

où
$R^1$ et $R^4$ représentent des groupements hydroxyle, des groupements aryloxy, alcoxy, aralcoxy ou cycloalcoxy renfermant jusqu'à 12 atomes de carbone, ou ils représentent en commun -O- ou -$NR^5$-,
$R^2$ et $R^3$ représentant chacun un atome d'hydrogène, un groupement alkyle ou cycloalkyle renfermant jusqu'à 12 atomes de carbone, un groupement aryle, un atome de chlore, ou ils représentent ensemble un groupement alkylène à 4-12 atomes de carbone,
$R^5$ représentant un atome d'hydrogène, un groupement alkyle, cycloalkyle, aralkyle ou aryle qui renferme jusqu'à 12 atomes de carbone et qui peut être substitué de son côté par des groupements alkyle ou alcoxy en $C_1$-$C_4$, et/ou
$a_{32}$) d'un monomère contenant des groupements amide et comportant une double liaison polymérisable, et/ou
$a_{33}$) d'un monomère contenant des groupements lactame et comportant une double liaison polymérisable,
ainsi en outre que
$a_4$) 0 à 45% en poids d'autres monomères ayant une activité de greffage et
$a_5$) 0 à 20% en poids d'un initiateur radicalaire,
les données en % en poids se rapportant chaque fois au poids total des composants $a_1$ à $a_5$,
et on prépare ainsi un poly(oxyphénylène) modifié A,
et
II) dans une autre zone au moins de l'extrudeuse, on ajoute ensuite, à 250-350 °C,
B) 5 à 95% en poids d'un polyamide,

C) 0 à 90% en poids d'un poly(oxyphénylène) non modifié,
D) 0 à 45% en poids d'un polymère vinylaromatique,
E) 0 à 40% en poids d'un caoutchouc modificateur de résilience,
F) 0 à 60% en poids d'additifs et de produits auxiliaires de transformation,

les données en % en poids se rapportant au poids total des composants A à F,

et on extrude le mélange ainsi obtenu.

**2.** Procédé selon la revendication 1, caractérisé en ce qu'on utilise, dans la réaction dans la première zone, de 0,01 à 0,09% en poids d'un initiateur radicalaire.

**3.** Procédé selon la revendication 1 ou 2, caractérisé en ce qu'on ajoute les composants E et/ou F dans une troisième zone à la suite de la deuxième zone où sont ajoutés les composants B, C et D.

**4.** Procédé selon l'une quelconque des revendications 1 à 3, caractérisé en ce que le mélange des composants A à F est dégazé dans une zone subséquente de l'extrudeuse.